# EUROPEAN PATENT APPLICATION

(11) **EP 0 774 622 A1**
(43) Date of publication of application: **21.05.1997**
(21) Application number: 96307874.6
(22) Date of filing: 30.10.1996
(51) Int. Cl.: F23D 14/42, F23D 14/72, B23K 7/10

(54) **Oxy-fuel torches**

(30) Priority: 17.11.1995 GB 9523545
(71) Applicant: The BOC Group plc, Windlesham Surrey GU20 6HJ (GB)
(72) Inventor: Hullenkremer, Paul, 2840 Rumst, Terhagen (BE)
(74) Representative: Gough, Peter

(57) **Abstract**

A safety system for an oxy-fuel torch (2) includes a push button switch (24) mounted on a body part (6) of the torch which when operated will open a valve (22) in the oxygen line for permitting flow of oxygen towards the torch nozzle (4) for a pre-selected period of time. A sensor means (30) is also provided at the nozzle (4) and which will maintain the valve (22) open beyond the pre-selected time when a flame is sensed.

## Description

The present invention relates to oxy-fuel cutting and welding apparatus and in particular to automatic safety systems for use with oxy-fuel cutting and welding apparatus.

Throughout this specification the term "oxy-fuel torch" is intended to cover oxy-fuel torches for use with cutting, burning, gouging and welding operations.

As is well-known, a flame is produced for welding and cutting ferrous and other metals when, for example, acetylene and oxygen are burned together in pre-selected ratios.

Sometimes welding and cutting operations have to be undertaken in confined spaces. This can lead, where an operator is careless or the oxy-fuel torch is faulty to an enrichment of the environment around the torch with oxygen. This is very dangerous and operators have been injured as a consequence of explosions and fires caused by the inadvertent oxygen enrichment of the atmosphere around the oxy-fuel torch.

It is an aim of the present invention to provide an automatic safety system for oxy-fuel cutting and welding operations which will minimise the possibility of the inadvertent enrichment of the environment around the oxy-fuel torch with oxygen.

According to the present invention, an automatic safety system for oxy-fuel cutting and welding apparatus comprises an oxy-fuel torch including a nozzle for the discharge of an oxy-fuel gas mixture, valve means for controlling the flow of fuel gas from a source towards the nozzle, valve means for controlling the flow of oxygen from a source towards the nozzle, and means for opening the oxygen valve means for permitting the flow of oxygen from the source towards the nozzle for a pre-selected period of time.

Preferably, the opening means includes a switch electrically connected to the oxygen valve means and which when operated will open and maintain open the oxygen valve means for a pre-selected period of time.

The switch can be a push button switch and the oxygen valve means may be a magnetically operated valve.

In one embodiment of the invention, sensor means is provided for sensing the presence of a flame at the nozzle, which sensor means will generate an electrical signal which is transmitted to control means for maintaining the oxygen valve means open beyond the pre-selected time. In effect, the sensor means will override the means for opening the oxygen valve means.

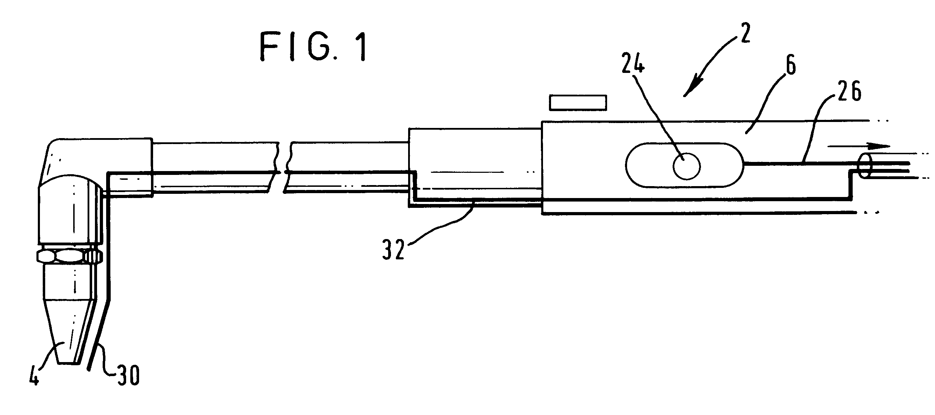

An embodiment of the invention will now be described by way of example, reference being made to the Figures of the accompanying diagrammatic drawings in which:-
Figure 1 is a schematic side view of an oxy-fuel torch;
Figure 2 is a schematic view of the oxy-fuel torch of Figure 1 connected to a mobile station; and

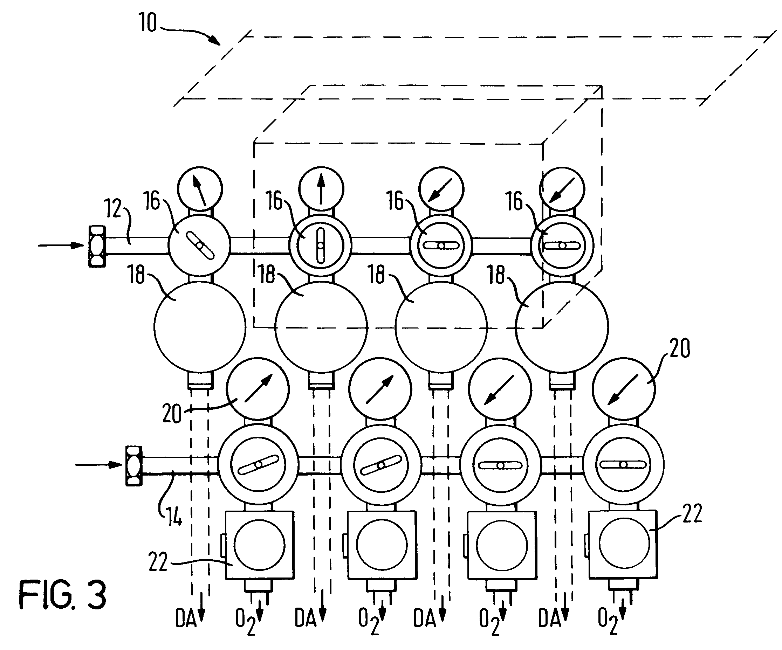

Figure 3 is a schematic plan view of the mobile station of Figure 2.

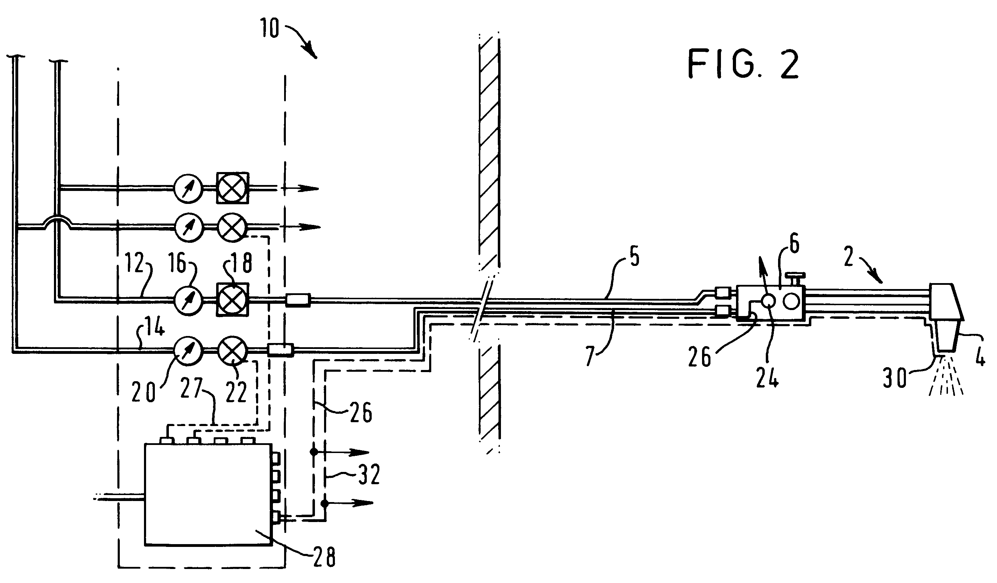

As shown, apparatus for cutting and welding operations includes an oxy-fuel torch 2 including a nozzle 4 and a body part 6. First and second hoses 5, 7 extend from the torch 2 to a mobile station 10. It will be appreciated that the mobile station 10 can accommodate a plurality of torches 2 but for clarity only one torch is illustrated in Figure 2. At the mobile station 10 which is usually located outdoors or in a well ventilated location, the hose 5 is connected to a line 12 which communicates with a source of fuel-gas, for example, acetylene or propane and the hose 7 is connected to a line 14 in communication with a source of oxygen. Located in the line 12 is a fuel-gas regulator 16 and a vacuum valve 18. Located in the line 14 is an oxygen regulator 20 and a magnetically operated oxygen valve 22.

Not illustrated but known per se there is a link between the vacuum valve 18 and the valve 22 such that fuel gas can flow through the vacuum valve 18 only when the oxygen valve 22 is open and oxygen is flowing towards the nozzle 4.

Mounted on the body 6 of the torch 2 is means, in the form of a push button switch 24 which is electrically connected by means of a wire 26 to a control unit 28 mounted in the mobile station 10. Extending from the control unit 28 is a further wire 27 connected to the valve 22.

Also mounted on the torch 2 immediately adjacent the nozzle 4 is a sensor 30 in the form of thermocouple. The thermocouple is electrically connected by means of a thermocouple wire 32 to the control unit 28. The control unit 28 includes a timer (not shown) connected to the push button switch 24 which will allow the oxygen valve 22 to be opened for a pre-selected period of time once the push button switch is activated.

In use, when it is desired to cut or weld a workpiece, the push button switch 24 is depressed which will cause the valve 22 to open, thereby permitting the flow through the line 14 and hose 7 of oxygen through the body 6 and into the nozzle 4. The vacuum valve 18 is linked to the oxygen valve 22 such that when the oxygen valve 22 is open then the vacuum valve 18 will also open, allowing fuel gas to flow through the line 12 and hose 5 through the body 6 to the nozzle 4. The gases discharging from the nozzle 4 are then ignited so that a welding and/or cutting operation can take place. The valve 22 will remain open for the selected period of time but will then close and in order to maintain the flame, the push button switch 24 must again be operated. The push button switch 24 can be operated as many times as is required to perform the work task.

Alternatively, in the embodiment illustrated in the Figures, the valve 22 is opened by pushing the button 24 which functions only for a pre-selected time set by the timer in the control unit 28. The time limit can be set to avoid any unwanted supply of gas without ignition of the flame which would cause oxygen enrichment of the surrounding environment. If the flame is ignited within the pre-selected time, then the sensor 30 will take over control and provided the flame is sensed by the sensor 30, then the oxygen valve 22 will remain open. Again, since the vacuum valve 18 is connected to the oxygen valve 22 then the fuel gas will only flow when the oxygen is flowing. When the flame is extinguished this will be detected by the sensor 30 and the oxygen valve 22 will be closed, at the same time, the fuel gas flow will also stop automatically. The oxygen flow can be re-established by pressing the push button 24 again.

The above described system ensures that there will only be a flow of oxygen to the nozzle 4 when the oxygen is required to sustain a welding or cutting flame. In all other situations eg. when the torch is not in use the oxygen valve 22 remains closed as does the vacuum valve 18. This is of particular relevance when a welding or cutting operation is performed in a closed or a confined environment.

## Claims

1. A safety system for oxy-fuel cutting and welding apparatus, comprising an oxy-fuel torch 2 including a nozzle 4 for the discharge of an oxy-fuel gas mixture, valve means 18 for controlling the flow of a fuel gas from a source towards the nozzle 4, valve means 22 for controlling the flow of oxygen from a source towards the nozzle 4, and means 24 for opening the oxygen valve means for permitting the flow of oxygen from the source towards the nozzle 4 for a pre-selected period of time.

2. A safety system as claimed in Claim 1, in which the opening means includes a switch 24 electrically connected to the oxygen valve means 22 and which when operated will open and maintain open the oxygen valve means 22 for a pre-selected period of time.

3. A safety system as claimed in Claim 2, in which the switch is a push button switch 24 mounted on the body part 6 of the oxy-fuel torch 2 and the oxygen valve means 22 is a magnetically operated valve.

4. A safety system as claimed in Claim 3, in which the push button switch 24 when operated generates an electrical signal which is passed to a control means 28 including a timer, the control means 28 in turn generating a signal for controlling the magnetically operated valve 22.

5. A safety system as claimed in any one of Claims 1 to 4, in which sensor means 30 is provided for sensing the presence of a flame at the nozzle 4, said sensor means 30 generating an electrical signal which is transmitted to the control means 28 for maintaining the oxygen valve means 22 open beyond the pre-selected time.

6. A safety system as claimed in any one of Claims 1 to 4, in which means is provided for automatically closing the fuel gas valve means 18 when the oxygen valve means 22 is closed.
